# EUROPEAN PATENT APPLICATION

(11) **EP 1 094 295 A2**
(43) Date of publication of application: **25.04.2001**
(21) Application number: 00121930.2
(22) Date of filing: 09.10.2000
(51) Int. Cl.: G01B 5/255, B60B 31/02, G01M 17/013

(54) **Device for centering and alignment of a spoked bicycle wheel**

(30) Priority: 11.10.1999 IT VI990206
(71) Applicant: Menghini, Luigi, 36041 Alte Di Montecchio Maggiore (Vicenza) (IT)
(72) Inventor: Menghini, Luigi, 36041 Alte Di Montecchio Maggiore (Vicenza) (IT)
(74) Representative: Bettello, Pietro, Dott. Ing.

(57) **Abstract**

The device for centring and alignment of the circles with rays for the wheels of the bicycles is characterized by the fact that it comprises an apparatus for pointing out the distance, the pointer of this apparatus being positioned corresponding to the circle at a preestablished distance from the wall of the circle. This apparatus is provided with an electronic card which converts the distance pointed out between the pointer of the device and the wall of the circle in a digital or analogic manner, showing on a display the value of the away-movement, positive or negative, with respect to an "O" position which is previously established, this value corresponding to the disbandment of the circle when the latter rotates.

## Description

### FIELD OF THE INVENTION

This invention relates to a device for use during the operation of centring and alignment of a circle having rays for a bicycle and velocipedes in general.

### BACKGROUND OF THE PRIOR ART

At present the centring and alignment of a circle having rays for the wheel of a bicycle are carried out in a completely manual manner and their good results depend only on the ability of the individual mechanic. In fact, for the purpose of controlling the centring and alignment of a circle having rays, the operator mounts the wheel in a crazy manner on a stand and launches the wheel in a fast rotation. The alignment which occurs with the lateral disbandment of the circle, is pointed out by approaching the lateral border of the circle in rotation a metallic lamina which comes in contact with the circle in the zones in which the circle is more warped.

Also the centring of the circle is pointed out by using a metallic lamina which is brought close in the frontal part of the circle specifically corresponding to the extremity of the lateral border, shown in the zones the mechanic operator stops the wheel by means of a suitable device and provides the draught of the nipples which fix the rays present in such zones.

Subsequently, the mechanic operator relaunches the wheels and again positioning the metallic lamina, controls if the distance between the extremity of the lamina and the border of the circle is kept constant.

In the presence of further warping, and/or eccentricity of the circle the mechanic operator provides for new "draught" of the rays.

These two operations of control and draught must be repeated several times to obtain the centring and the alignment of the circle.

On the basis of what has been discussed hereinabove it is evident that this manner of operation is accompanied by at least two drawbacks, one of the economical type because the entire operation requires a certain time and another of technical type, because it is impossible to reach a perfect centring and alignment, because the distance between the extremity of the lamina and the border of the circle in rotation is determined according to the discretion of the mechanic operator, on the basis of his experience.

### SUMMARY OF THE INVENTION

One object of the present invention is to provide a device which eliminates the drawbacks mentioned hereinabove by taking away from the mechanic operator every discretionality of execution and making the operation very rapid.

Another object of the invention is to provide a device which allows to determine the value of the removal of the centring and alignment of the circle corresponding to each individual ray, so that the mechanic operator determines with greater accuracy how much he must "pull" the nipples.

Still another object of the invention is to provide a device for the centring and alignment of the circles with rays which offers minimum obstruction, both because of limited cost and of adapting itself to all measures of wheels and rays in commerce.

Still another object of The invention is to provide a device which allows a non-experienced person, such as the cycling tourist and the amateur cyclist, to carry out personally the centring and alignment of the wheels of his bicycle.

These objects are achieved by means of an electronic pointer of the distance which is positioned corresponding to the border of the circle to be controlled. This pointer of the distance is provided with an electronic card which converts the distance between the pointer of the apparatus and the wall of the circle in a digital or analogic manner showing on a display the centesimal value of the removal, positive or negative, with respect to a position "O" which is preestablished, and which corresponds to the disbandment of the circle when it rotates.

These and other characterics of the invention are more appreciated by the description of a possible embodiment provided as a non-limiting illustration, by reference to the drawings, of which:
- FIG. 1: shows a front elevational view of the complete device of the invention, positioned for the alignment of the circle;
- FIG. 2: shows an elevational side view of the device of Fig. 1;
- FIG. 3: shows a detailed view of the working zone of the device of the invention as seen in Fig. 1;
- FIG. 4: shows an elevational frontal view of the device of the invention positioned for the centring of the circle;
- FIG. 5: is an elevational side view of the device of Fig. 4;
- FIG. 6: is a detailed view of the working zone of the device of the invention, as seen in Fig. 4.

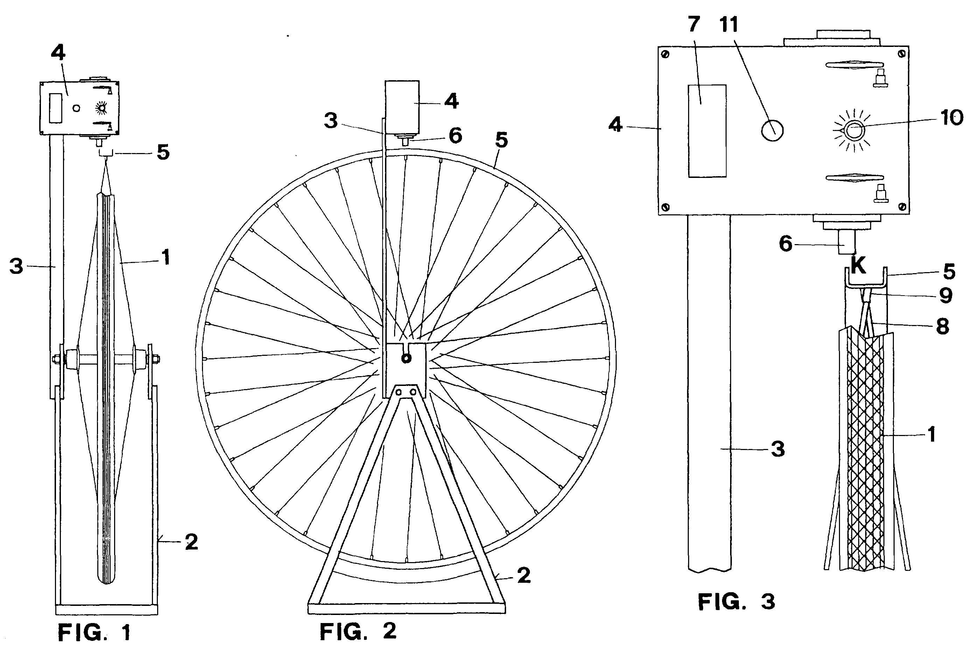

As shown in the Figures, the wheel (1) is mounted in a crazy manner on a frame (2) which supports by means of stirrup (3) the pointing apparatus of distance (4), which apparatus is positioned corresponding to the border of circle (5). Specifically as shown in Figs. 1-3, for the alignment operation, the pointing apparatus (4) is fixed in such a manner that pointer (6) becomes disposed frontally to the lateral wall of circle (5), parallel to the axis of wheel (1) and distant from this wall of a preestablished distance "K", to which is given the value "O" which appears on display (7).

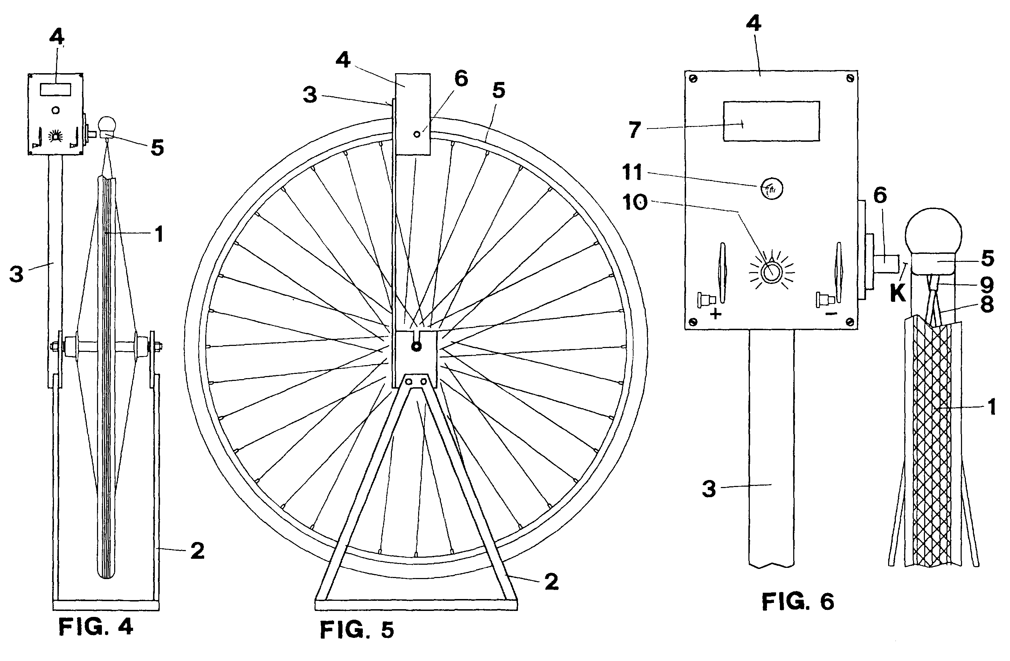

In analogous manner as shown in Figs. 4-7, for the centring operation the pointing apparatus (4) is fixed in a manner that the pointer (6) on the contrary becomes disposed frontally to the external or to the internal, wall of circle (5), preferably the external circumferential border of the same circle of a preestablished distance "K" to which is given the value "O" which appears on display (7).

In operation, the operator, who may be a professional mechanic or a common cyclist, rotates angularly the circle and reads on display (7), corresponding to each ray, the value of the removal, positive or negative, from the preestablished value of distance "K". In function of these values, for each ray (8) the operator regulates the action of draught on nipples (9) up to the point when value "O" does not appear on display (7).

The pointing apparatus of distance (4) provided with an electronic card with a reading with the laser ray, with an ultrasound or by means of other methods known in the present status of the technic, is completed with latch (10) for the purpose of setting position "O" on the display and push-button (11) of turning on and off.

Finally the pointing apparatus (4) is capable of moving both horizontally and vertically on stirrup (3) to adjust to different diameters of wheel (2).

On the basis of what has been described, one understands that it is possible to achieve the centring and alignment of a wheel with a circle having rays in a perfect manner so as to satisfy the requirements of safety of professional corridors, because at high speed a minimum warping of the circle generates vibrations on the frame of the bicycle so as to lose control of the bicycle.

## Claims

1. A device for the centring and alignment of the circles having rays for the wheels of bicycles, characterized by the fact that it comprises a pointing apparatus for the distance (4), the pointer (6) of said apparatus being positioned corresponding to the circle at a distance (K) preestablished by the wall of the circle, said pointing apparatus (4) being provided with an electronic card which converts the distance pointed out between the pointer of the instrument and the wall of the circle, in a digital or analogic measure, showing on a display the value of the removal, positive or negative, with respect to a preestablished position "O", said value corresponding to the disbandment of the circle when said circle rotates.

2. The device according to claim 1, characterized by the fact that during the operation of alignment of the circle, said pointer of said pointing apparatus (4) is disposed frontally to the side wall of said circle, parallel to the axis of the wheel, and the distance from said wall is a distance (K) which is prefixed, to which is associated the value "O" which appears on the display (7).

3. The device according to claim 1, characterized by the fact that curing the centring operation of the circle, said pointer (6) is disposed frontally with respect to the external wall or the internal wall of said circle, preferably corresponding to the external circumferential border of said circle, at a distance (K) which is prefixed, to which is associated the value "O" which appears on the display (7).

4. The device according to claim 2 or 3, characterized by the fact that the wheel (1) is mounted in a crazy manner, on a frame (2), said frame supports by means of stirrup (3) said pointing apparatus (4), said apparatus being positioned corresponding to the border of said circle (5), said pointer (6) being disposed at a distance (K) from the wall of said circle which is prefixed, the value "O" which appears on said display (7) being associated to said distance (K).

5. The device according to one or more of the preceding claims characterized by the fact that the operator is allowed by rotating angularly the circle to read on the display (7) corresponding to each ray, the value of the removal, positive or negative, with respect to the preestablished value (K) of the distance.

6. The device according to one or more of the preceding claims, characterized by the fact that the operator is permitted to define for each individual ray (8) the proper action of draught on the nipples (9) up to the point when the value "O" no longer appears on the display (7).

7. The device according to one or more of the preceding claims characterized by the fact that it comprises an electronic card having a reading with laser ray, with an ultrasound, or by means of other methods well known in the present technique.

8. The device according to one or more of the preceding claims characterized by the fact that the reading of the disbandment on the display is indicated with centesimal tolerance.

9. The device according to one or more of the preceding claims characterized by the fact that said pointing apparatus (4) is provided with latch (10) in order to set the value "O" at the beginning of the operation.

10. The device according to one or more of the preceding claims characterized by the fact that said pointing apparatus (4) is capable of sliding and positioning both horizontally and vertically to adapt itself to different diameters of the wheel (1).
